# EUROPEAN PATENT APPLICATION

(11) **EP 3 930 149 A1**
(43) Date of publication of application: **29.12.2021**
(21) Application number: 21190370.3
(22) Date of filing: 29.11.2018
(51) Int. Cl.: H02K 1/14, H02K 3/28, H02K 15/04

(54) **METHOD FOR PROVIDING THE WINDING OF A PLURALITY OF WIRES WITHIN A STATOR PACK OF A STATOR FOR ELECTRIC MOTORS AND PROCESSING LINE FOR THE PROVISION OF THE METHOD**

(62) Divisional of application: 18425090.0
(71) Applicant: Marsilli S.p.A., 26012 Castelleone (CR) (IT)
(72) Inventor: PARATI, Gian Battista, 26012 CASTELLEONE CR (IT)
(74) Representative: Modiano, Micaela Nadia

(57) **Abstract**

A method for providing the winding of a plurality of wires within a stator pack (S) of a stator for electric motors, characterized in that it comprises:
- a winding phase, in which at least one linear winding of woven wires (V1, V2, V3) around a linear support (11, 11') is provided;
- a winding release step, in which the linear support (11, 11') is extracted from the inside of the at least one linear winding of woven wires (V1, V2, V3);
- a pressing step, in which the at least one linear winding of woven wires (V1, V2, V3) is pressed transversely;
- a rolling step, in which the at least one linear winding of woven wires (V1, V2, V3) is curved along a cylindrical surface (31, 31') by rolling it around a roller (33, 33') so as to convert it into at least one cylindrical winding of woven wires (C1, C2, C3);
- a winding repositioning step, and
- a step for the insertion and fixing of the stator teeth (D).

The present invention also relates to a processing line for the provision of the method.

## Description

The present invention relates to a method for providing the winding of a plurality of wires within a stator pack of a stator for electric motors, in particular of the continuous hairpin type. The present invention also relates to a processing line for the provision of said method.

Stators known as "continuous hairpin", in which the wires are woven with appropriate twists or bends and in which the ends of the conducting wires protrude longitudinally from the stator, are currently considerably important in the field of stators for electric motors.

The present invention is useful and practical particularly to provide stator packs (i.e., the part of the stator that comprises the stator teeth and the windings) for motors of the type known as "continuous hairpin", in which the pitch of the windings is substantially linear and in which two mutually coaxial cylindrical windings (or baskets) are present in the stator pack.

The provision of this type of windings has considerable technical problems, which reside in the difficulty of obtaining windings with a cylindrical geometry with the necessary twists and in the positioning of said windings between the stator teeth.

In the prior art, the wires are generally woven after being placed along a cylindrical surface.

The movement, bending and positioning of the wires is often time-consuming, complicated and expensive to provide. Moreover, the results are not always satisfactory.

The aim of the present invention is to overcome the limitations of the prior art described above, by providing a method and a processing line that allow to provide windings of the continuous hairpin type in a manner that is simple, reliable and economically competitive.

Within this aim, an object of the present invention is to provide a method and a processing line that allow optimal management of the pitch of the wires during the entire cycle for the production of the stator pack.

Another object of the invention is to provide a method and a processing line for the provision of windings of the continuous hairpin type which are alternative with respect to the prior art.

Another object of the invention is to provide a method and a processing line for the provision of windings of the continuous hairpin type that ensure high precision in the execution of the windings.

This aim, the objects mentioned and others which will become better apparent hereinafter are achieved by a method according to claim 1.

This aim and these and other objects are also achieved by a processing line according to claim 12.

Further characteristics and advantages will become better apparent from the description of two preferred but not exclusive embodiments of a processing line, illustrated by way of nonlimiting example with the aid of the accompanying drawings, wherein:
Figure 1 is a perspective view of a first winding device according to the invention;
Figures 2 and 3 are respectively a top view and a front view of the device of Figure 1;
Figure 4 is a perspective view of a second winding device according to the invention;
Figures 5 and 6 are respectively a top view and a front view of the device of Figure 4;
Figure 7 is an exploded view of the device of Figure 1;
Figures 8 and 9 are views of the winding pattern of a first linear winding of wire, provided by means of the device of Figure 1;
Figures 10 and 11 are views of the winding pattern of a second linear winding of wire, provided by means of the device of Figure 4;
Figures 12 and 13 are respectively a perspective view and a lateral elevation view of a machine for providing the pressing step and the rolling step of a method according to the invention;
Figure 14 is a view of the machine of Figure 12 during the rolling step;
Figure 15 is a view of the machine of Figure 12 together with a cylindrical separation element, during the step for repositioning the windings of the method according to the invention;
Figures 16, 17 and 18 are respectively a perspective view, a lateral elevation view and a top plan view of a cylindrical separation element coupled to the windings of woven wires;
Figures 19, 20, 21 are respectively a perspective view, a top plan view and a sectional view, taken along a vertical plane, of part of an apparatus according to the invention during the step for the insertion of the stator teeth;
Figure 22 is a perspective view of the apparatus of Figure 19 in a subsequent moment of the step for the insertion of the stator teeth;
Figures 23 and 24 are views of a first embodiment of the step for the insertion and fixing of the stator teeth;
Figure 25 is a sectional view of a stator pack provided by means of the teeth insertion step of Figures 23 and 24;
Figures 26 and 27 are views of a second embodiment of the step for the insertion and fixing of the stator teeth;
Figure 28 is a sectional view of a stator pack provided by means of the teeth insertion step of Figures 26 and 27;
Figures 29, 30 and 31 are views of a third embodiment of the step for the insertion and fixing of the stator teeth;
Figure 32 is a sectional view of a stator pack provided by means of the teeth insertion step of Figures 29, 30 and 31;
Figures 33 and 34 are a perspective view and a top plan view of a stator pack provided by means of a first embodiment of the method according to the invention;
Figures 35 and 36 are a perspective view and a sectional view, taken along a horizontal plane, of a stator pack provided by means of a second embodiment of the method according to the invention;
Figures 37, 38 and 39 are respectively a lateral elevation view, a top view and a sectional view of a linear winding of wires provided in a second embodiment of the method according to the invention;
Figures 40 to 43 are views of successive phases of the rolling step of the second embodiment of the method according to the invention;
Figure 44 is a view of the winding pattern of the cylindrical winding of wires provided by means of the winding step in the second embodiment of the method according to the invention.

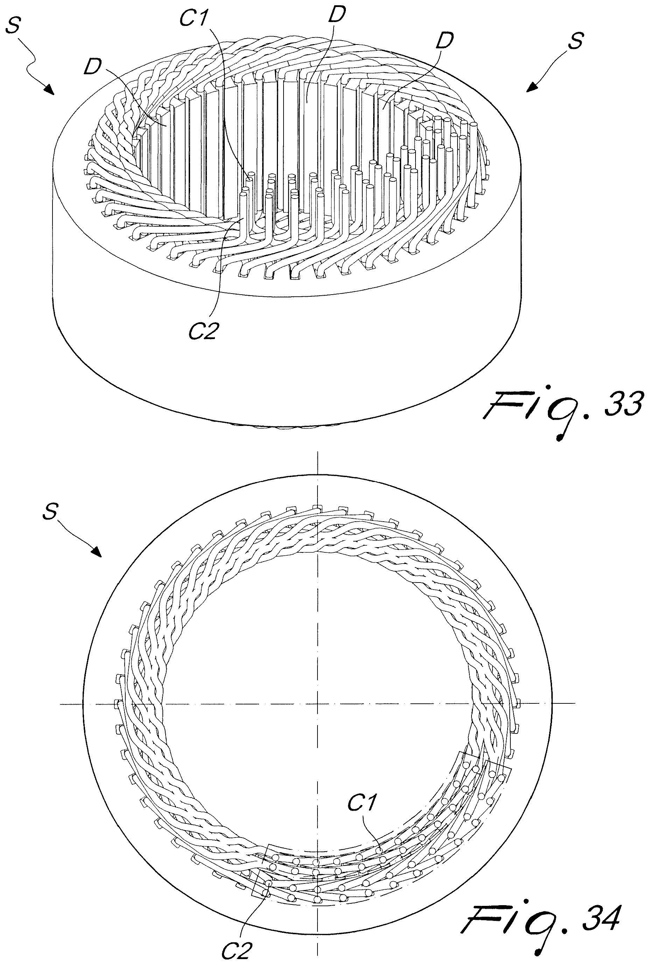

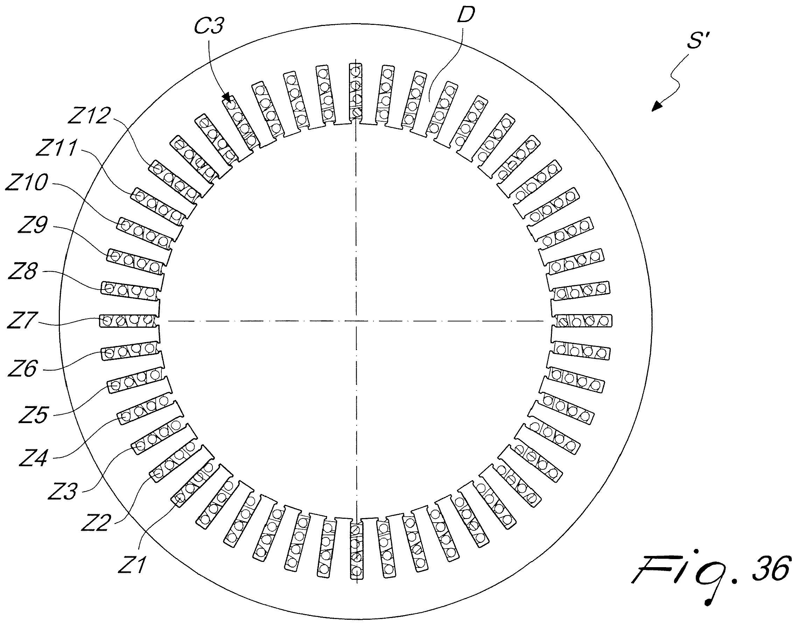

With reference to the cited figures, the method for winding a plurality of wires within a stator pack S of a stator for electric motors, particularly of a stator of the continuous hairpin type, allows to provide a stator pack S of the continuous hairpin type, such as for example the one shown in Figures 33 and 34 or 35 and 36.

In its general features, which are common to all the embodiments of the method, according to the invention, it comprises:
- a winding phase, in which at least one plurality of wires A1-A12, B1-B12, Z1-Z12 arranged with their ends aligned is wound around a respective linear support 11, 11' so that all the wires A1-A12, B1-B12, Z1-Z12 of said at least one plurality of wires A1-A12, B1-B12, Z1-Z12 are wound with a same winding pitch P1, P2, P3 and each wire A1-A12, B1-B12, Z1-Z12 of said at least one plurality of wires A1-A12, B1-B12, Z1-Z12 is offset with respect to the adjacent wire by said winding pitch P1, P2, P3 so as to provide at least one linear winding of woven wires V1, V2, V3 around the linear support 11, 11';
- a winding release step, in which the linear support 11, 11' is extracted from the inside of the at least one linear winding of woven wires V1, V2, V3;

- a pressing step, in which the at least one linear winding of woven wires V1, V2, V3 is pressed transversely by means of a compression device 20;
- a rolling step, in which the at least one linear winding of woven wires V1, V2, V3 is curved along a cylindrical surface 31' by rolling it around a roller 33, 33' so as to convert the at least one linear winding of woven wires V1, V2, V3 into at least one cylindrical winding of woven wires C1, C2, C3; said at least one cylindrical winding of woven wires C1, C2, C3 is thus arranged around the roller 33, 33';
- a winding repositioning step, in which the at least one cylindrical winding of woven wires C1, C2, C3 is extracted from the roller 33, 33' and arranged on a supporting device 40;
- a step for the insertion and fixing of the stator teeth D, in which multiple stator teeth D are inserted radially within the at least one cylindrical winding of woven wires C1, C2, C3 and are mutually fixed so as to form substantially a ring and provide a stator pack S, S'.

Conveniently, the phases and the steps are performed in the order in which they have just been described.

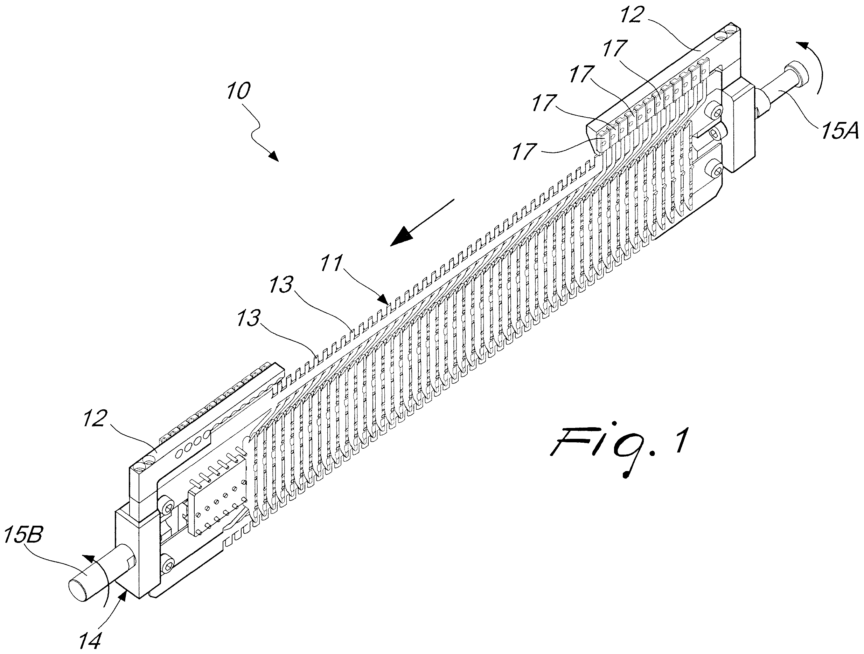

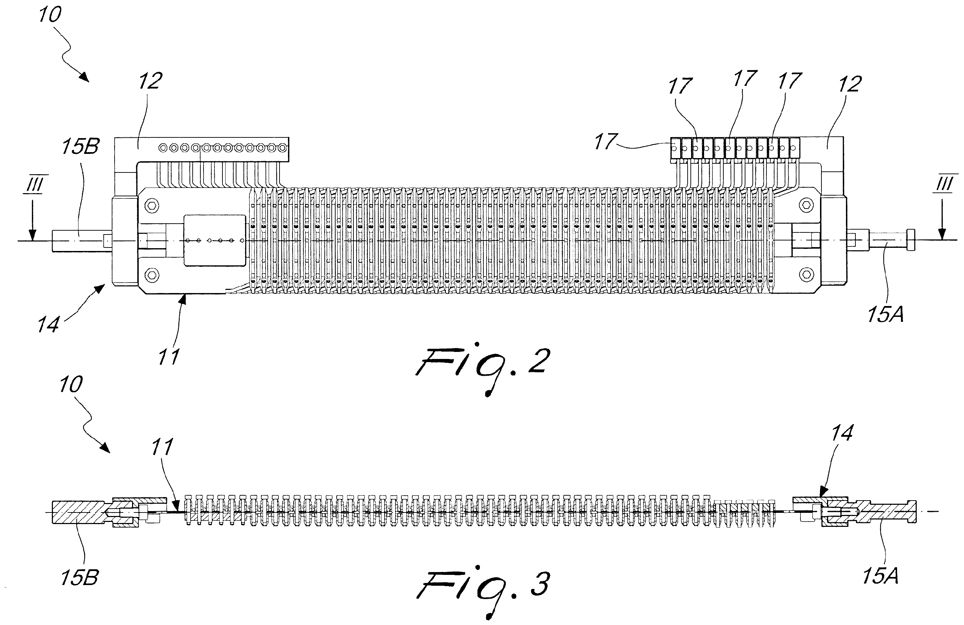

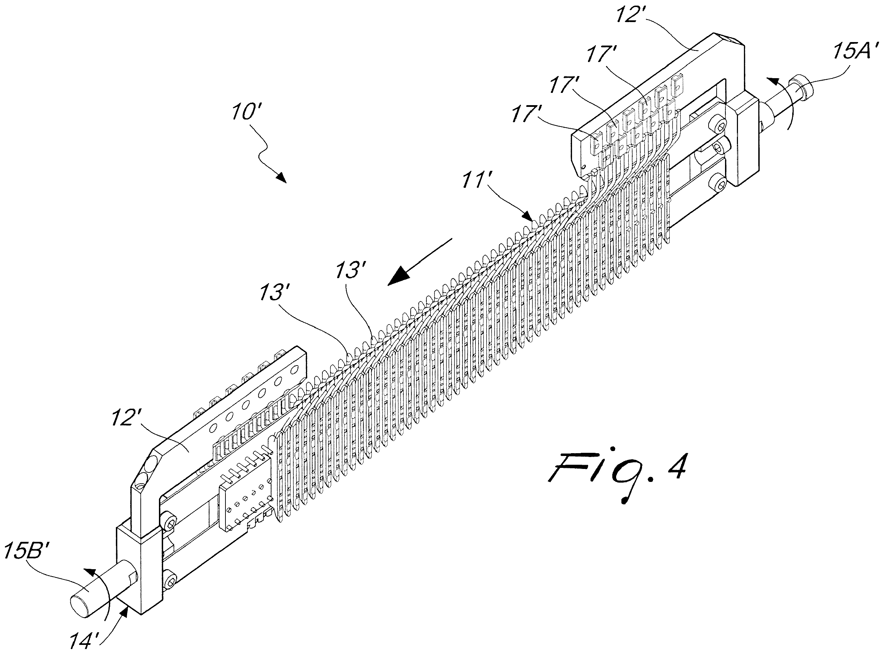

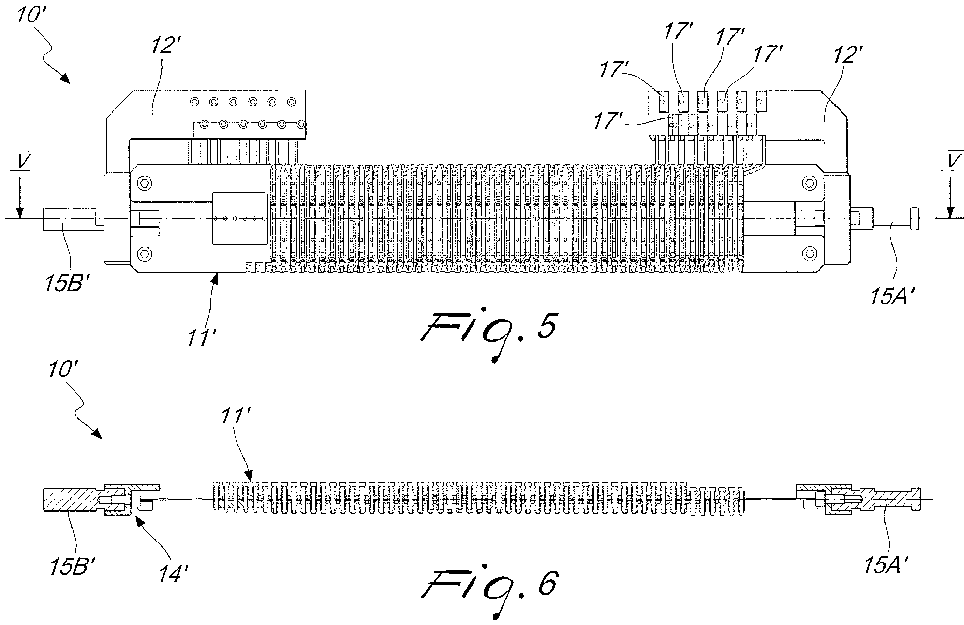

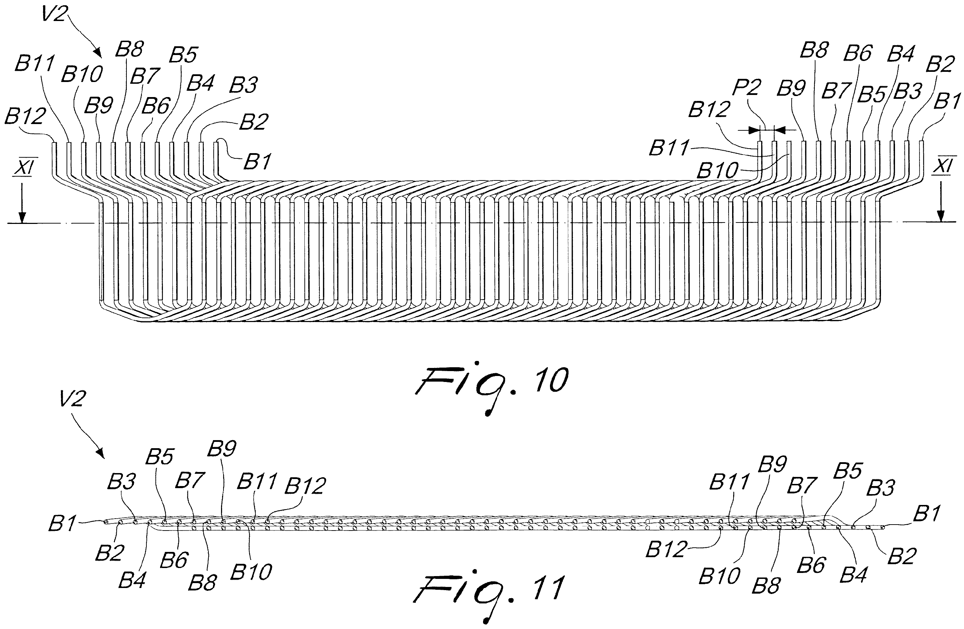

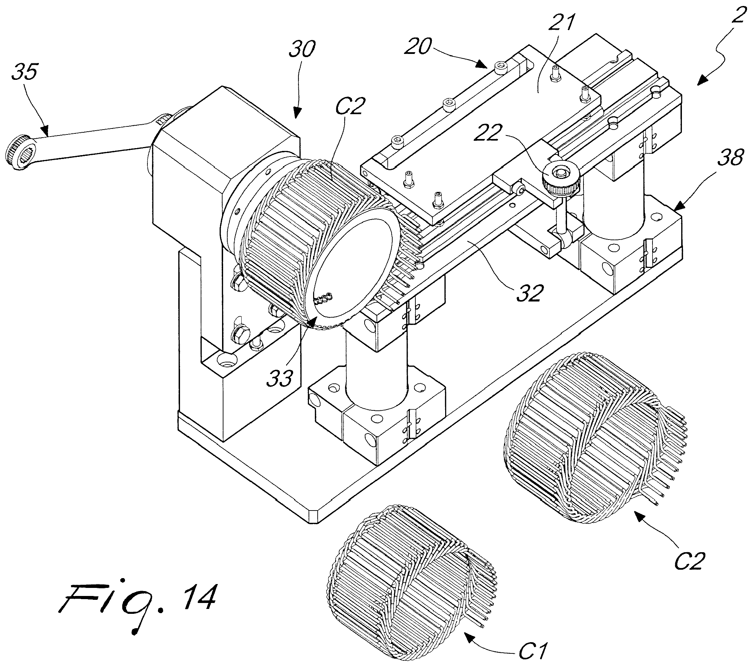

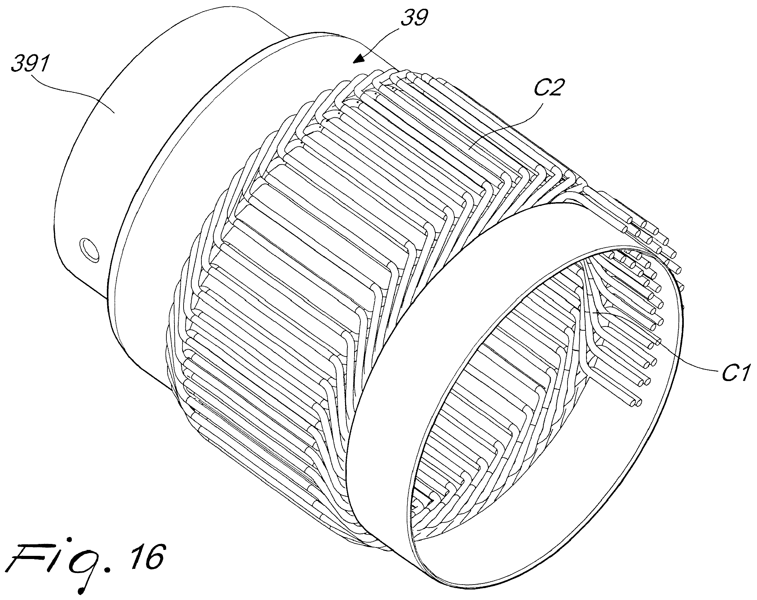

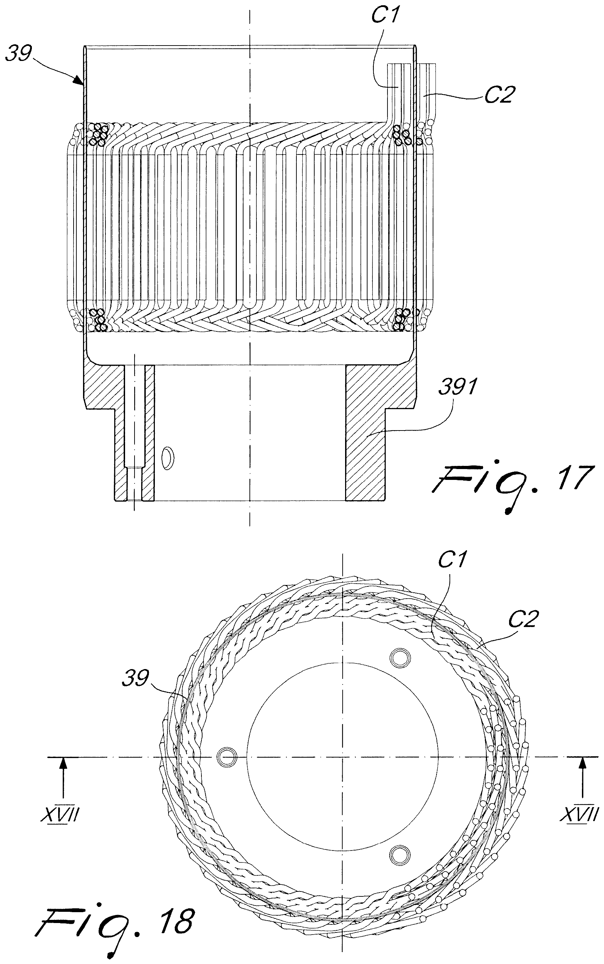

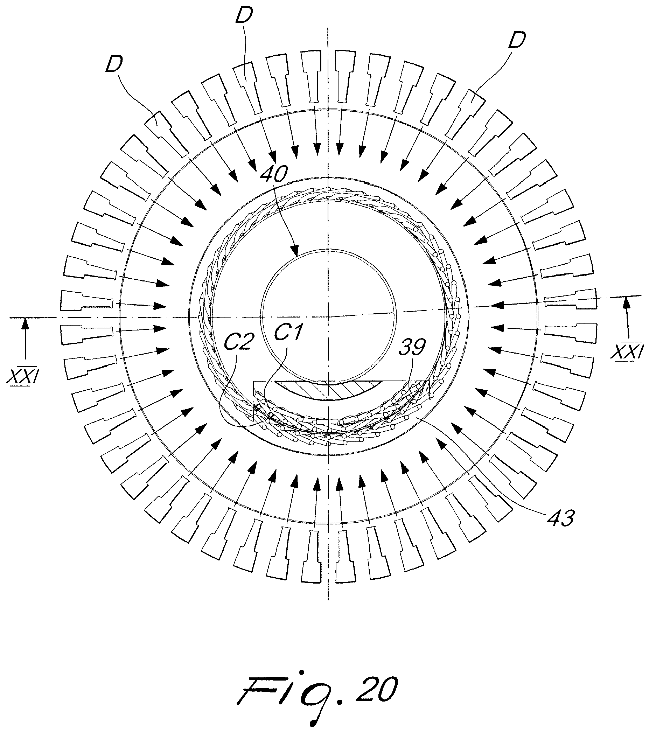

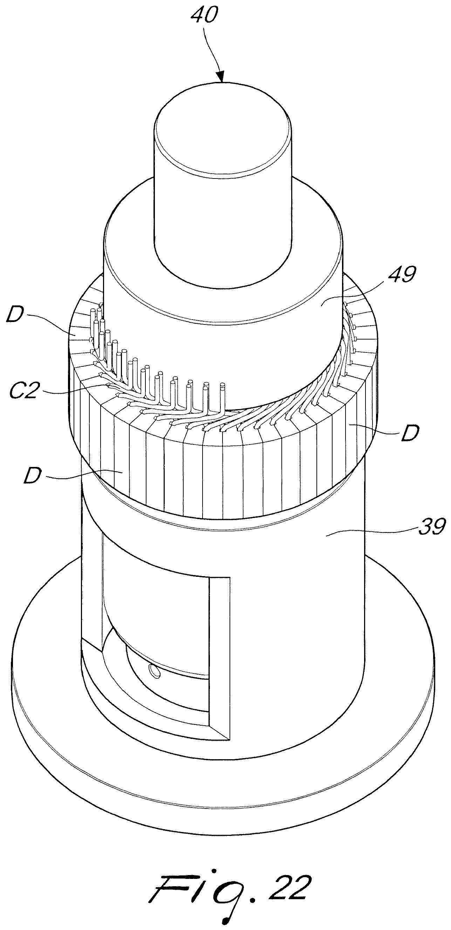

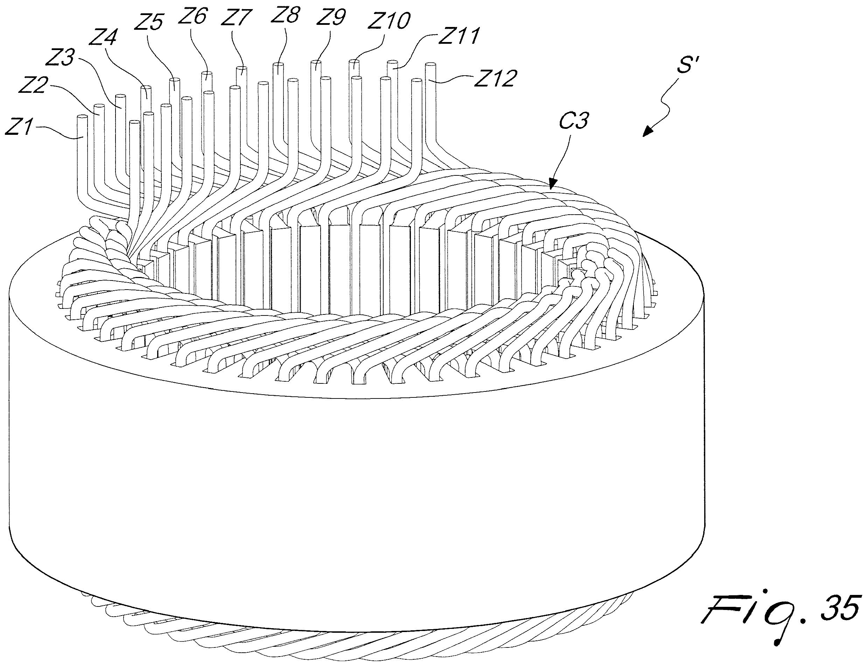

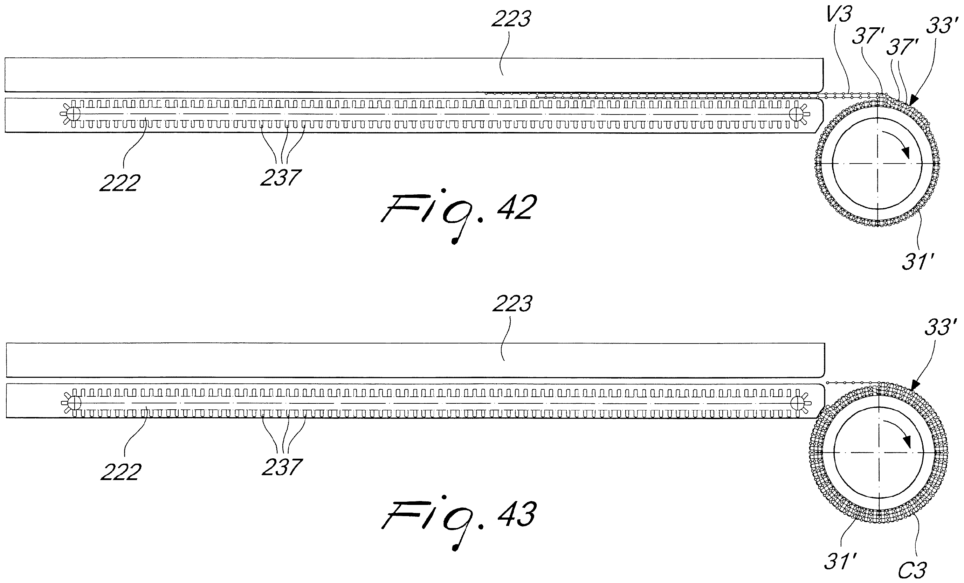

In greater detail, in some embodiments of the method (such as the one shown in Figures 1 to 34), in the winding step two different pluralities of wires A1-A12 (i.e., two separate wire groups) are wound, each around a respective linear support 11, 11', so as to obtain two different linear windings of woven wires V1, V2 which have mutually different winding pitches P1, P2, and in the winding step said two different linear windings of woven wires V1, V2 are both rolled, in succession, around the same roller 33; as an alternative, in other embodiments of the method (such as the one shown by Figures 35 to 44), in the winding phase a single plurality of wires Z1-Z12 (i.e., a single group of wires) is wound around a single linear support 11, so as to obtain a single linear winding of woven wires V3, and in the winding phase said single linear winding of woven wires V3 is rolled around the roller 33' twice (i.e., performing two complete windings).

The embodiments in which two different pluralities of wires A1-A12 are wound so as to obtain two different linear windings of woven wires V1, V2 are now described hereinafter in greater detail with reference to Figures 1 to 34.

In these embodiments, the method allows to provide a stator pack S of the continuous hairpin type, such as for example the one shown in Figures 33 and 34, in which two cylindrical windings of woven wires (or baskets) C1, C2, which comprise appropriate twists of said wires A1-A12, B1-B12, are arranged coaxially inside the stator pack S, interleaved by the stator teeth D.

The wires A1-A12, B1-B12 are preferably made of copper and have a rectangular cross-section (in a preferred embodiment, they have a cross-section with dimensions of 12.5 x 13.2 mm).

In these embodiments, the method initially comprises the winding phase, in which a first plurality of wires A1-A12 (which are preferably more than two and are twelve in the illustrated example), arranged so that their ends are aligned and substantially parallel, is wound around a first linear support 11 so that all the wires A1-A12 of said first plurality of wires A1-A12 are wound with a same first winding pitch P1.

The expression "winding pitch" is understood as the distance between the individual wires once winding has occurred. Therefore, each wire A1-A12 of said first plurality of wires A1-A12 is offset with respect to the adjacent wire by said first winding pitch P1.

In this manner, a first linear winding of woven wires V1 is provided around the first linear support 11.

Also in this winding phase, a second plurality of wires B1-B12 (which are preferably equal in number to the first plurality of wires A1-A12 and which are twelve in the illustrated example), arranged with the ends aligned and parallel, is wound around a second linear support 11' so that all the wires B1-B12 of said second plurality of wires B1-B12 are wound with a same second winding pitch P2, which is greater than the first winding pitch P1.

Each wire of said second plurality of wires B1-B12 is therefore offset with respect to the adjacent wire by said second winding pitch P2.

A second linear winding of woven wires V2 around the second linear support 11' is thus provided.

In the preferred embodiment of the method, in this winding step one end of each of the wires of the first plurality of wires A1-A12 is fixed preliminarily to a winding arm 12 and then the linear support 11 is made to rotate with respect to the winding arm 12, or vice versa, and is made to translate parallel to the winding arm 12, or vice versa, in order to provide the first linear winding of woven wires V1. Likewise, one end of each of the wires of the second plurality of wires B1-B12 is fixed preliminarily to a winding arm 12' and then the second linear support 11' is made to rotate with respect to said winding arm 12', or vice versa, and to translate in a parallel arrangement with respect to said winding arm 12', or vice versa, in order to provide the second linear winding of woven wires V2.

Such winding step is preferably provided by means of a first winding device 10 and a second winding device 10', which are configured respectively to provide the first linear winding of woven wires V1 and the second linear winding of woven wires V2.

A possible embodiment of these two winding devices 10, 10' is shown in Figures 1 to 7.

In general, each winding device 10, 10' comprises a linear support 11, 11' which is provided, on two opposite edges, with a plurality of teeth 13, 13' adapted to be interposed between the wound wires A1-A12, B1-B12.

Conveniently, the teeth 13 of the first winding device 10 are spaced by a distance that is equal to the first winding pitch P1 and the teeth 13' of the second winding device 10' are spaced by a distance that is equal to the second winding pitch P2.

The characteristics described hereinafter, unless otherwise specified, are to be understood as common to both binding devices 10, 10' in the preferred and illustrated embodiment.

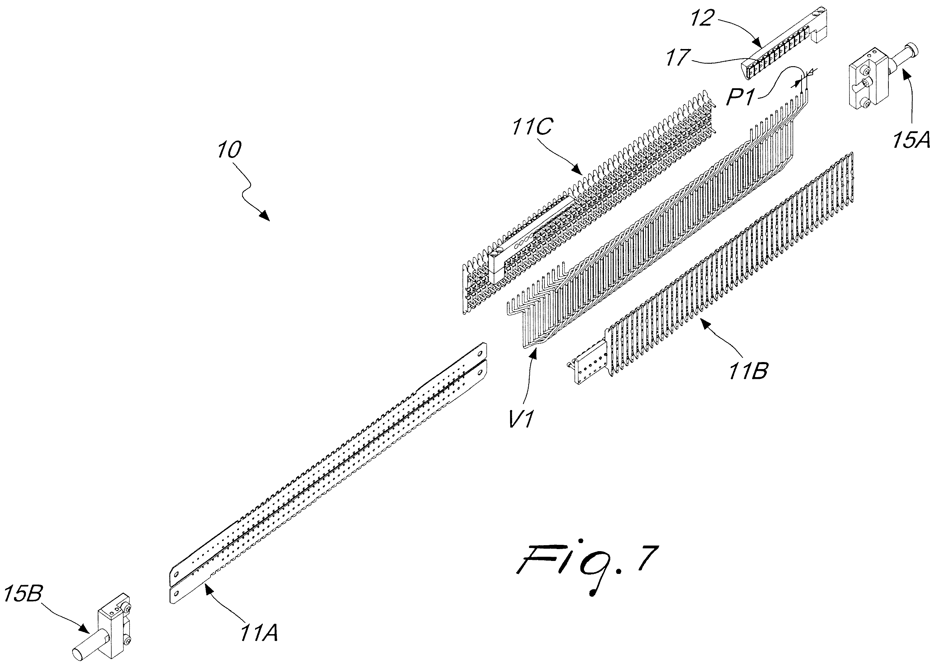

In greater detail, with particular reference to Figure 7, the linear support 11 comprises a flattened bar 11A which is longitudinally extended and comprises the teeth 13 on two opposite edges.

Preferably, the linear support 11 also comprises two combs 11B, 11C which are coupled detachably to the two sides of the bar 11A and contribute to direct the wires A1-A12 during the winding.

The winding devices 10, 10' further comprise at least one and preferably two winding arms 12, 12' provided with a plurality of engagement elements 17, 17' (such as for example terminals) to fix the ends of the wires A1-A12, B1-B12.

Advantageously, the engagement elements 17 of the first winding device 10 are spaced laterally by a distance equal to the first winding pitch P1 and the engagement elements 17' of the second winding device 10' are spaced laterally by a distance that is equal to the second winding pitch P2.

The linear support 11, 11' and the at least one winding arm 12, 12' are connected mechanically by means of a supporting structure 14, 14' so that they can rotate with respect to each other and can move in a linear manner parallel to each other in order to provide a linear winding of woven wires V1 around the linear support 11, 11'.

Preferably, the supporting structure 14 comprises one or two shafts 15A, 15B or hubs which allow to actuate rotationally the linear support 11 by means of an actuator and/or by means of another known motion transmission system.

In practice, as a consequence of each rotation through a predetermined angle (for example 180°) of the bar 11A with respect to the winding arm 12 (or vice versa), the bar 11A is moved in a linear manner with respect to the winding arm (or vice versa) by a distance that is preferably equal to the winding pitch P1.

Advantageously, the linear support 11, 11', the winding arm 12, 12' and the supporting structure 14, 14' are connected detachably and are configured to release the linear winding of woven wires V1, V2.

In fact, after the winding phase, there is the winding release step, in which the linear support 11 is extracted from the inside of the first linear winding of woven wires V1 and the second linear support 11' is extracted from the inside of the second linear winding of woven wires V2. In practice, the linear windings of woven wires V1, V2 are released, for example as shown in Figure 7 (it should be noted that the bar 11A is extracted longitudinally from the linear winding V1 and the combs 11B, 11C also are extracted).

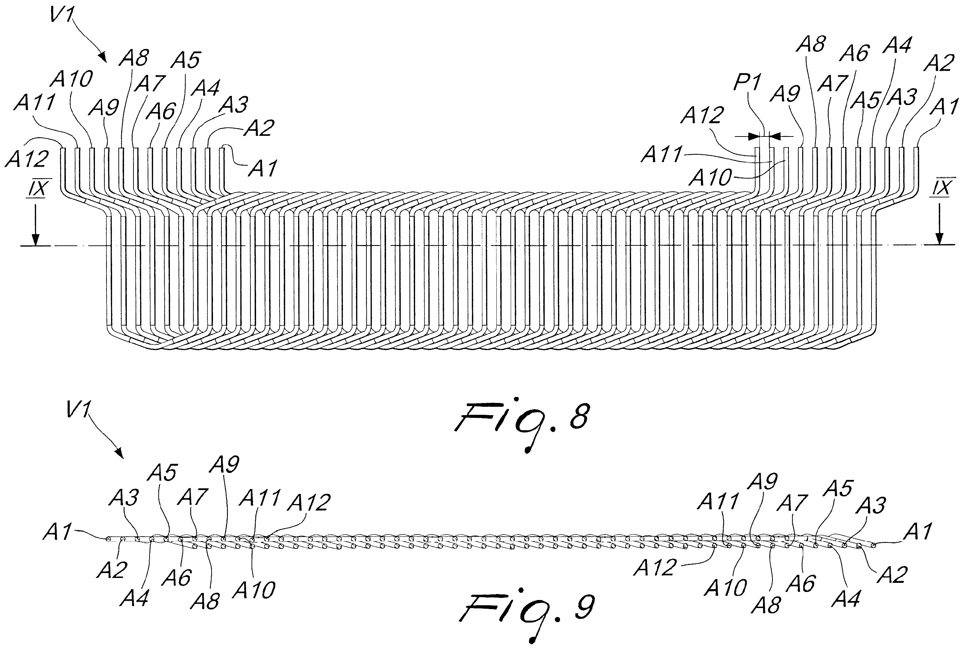

At the end of the winding phase, one therefore obtains a first linear winding of woven wires V1 and a second linear winding of woven wires V2 with a winding pattern such as the one shown in Figures 8-11; it should be noted that the wires A1-A12, B1-B12 are woven, comprising a series of bends and with the ends of the wires that protrude in a linear manner and parallel to each other.

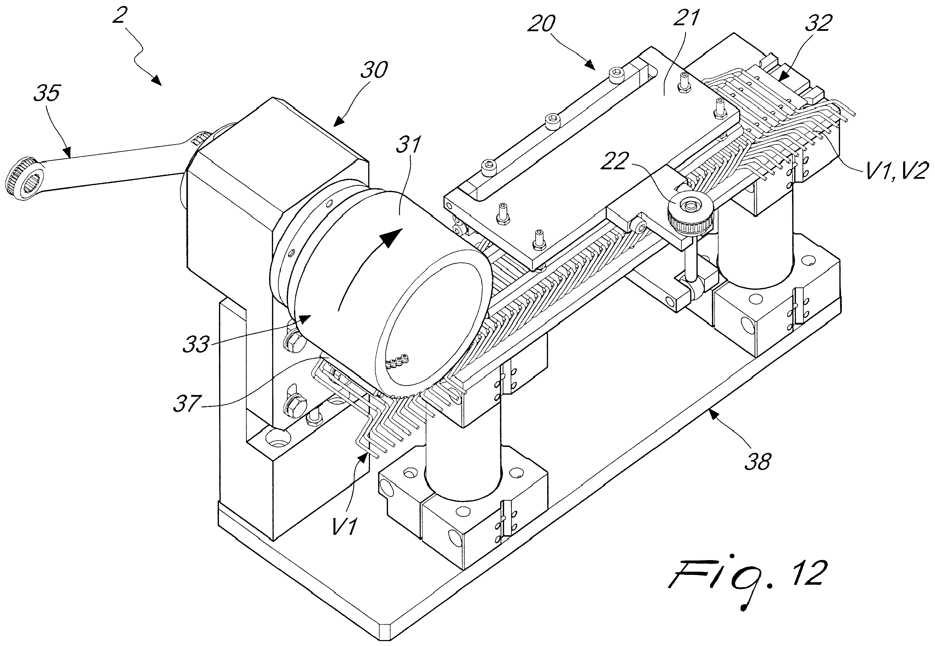

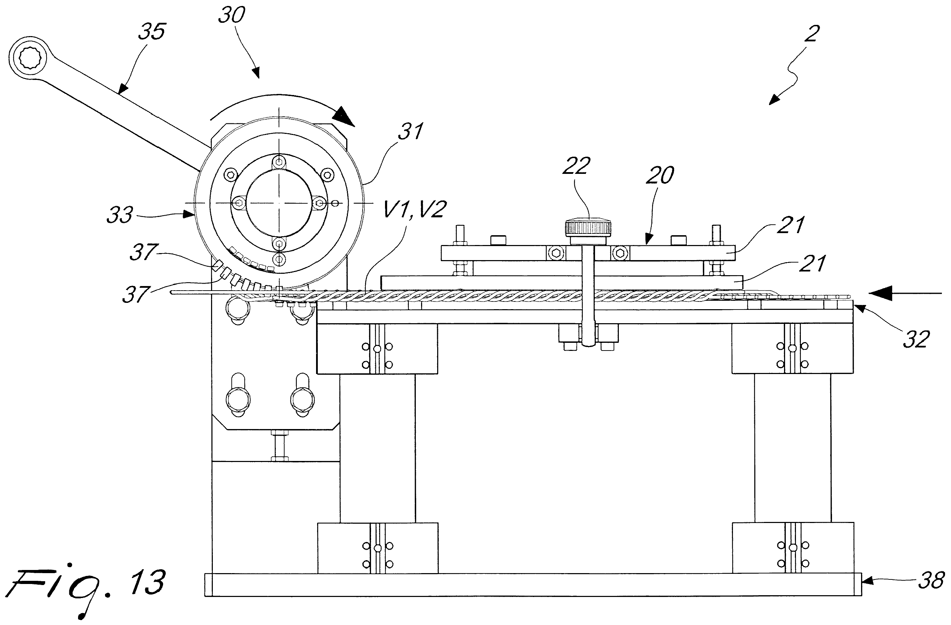

Subsequently, with reference to Figures 12 and 13, the method comprises a pressing step, in which the first linear winding of woven wires V1 and the second linear winding of woven wires V2 are pressed transversely, so as to move the wires closer to a longitudinal axis of the winding around which they had been wound, by means of a compression device 20 such as for example a vice or a press or the like.

After pressing, a rolling (or bending) step, shown in Figures 12-14, is provided, in which the first linear winding of woven wires V1 and the second linear winding of woven wires V2, after being pressed, are curved along a cylindrical surface 31, rolling them around a same roller 33 (to be understood as any substantially cylindrical rotatable element), so as to convert the first linear winding of woven wires V1 into an internal cylindrical winding of woven wires C1 and the second linear winding of woven wires V2 into an external cylindrical winding of woven wires C2 which is arranged coaxially and externally to the internal cylindrical winding of woven wires C1. The expression "cylindrical winding of woven wires" is understood to reference a winding or basket of wires that extends along a substantially cylindrical surface (and therefore is substantially symmetrical with respect to a central axis and accordingly has a substantially circular transverse cross-section).

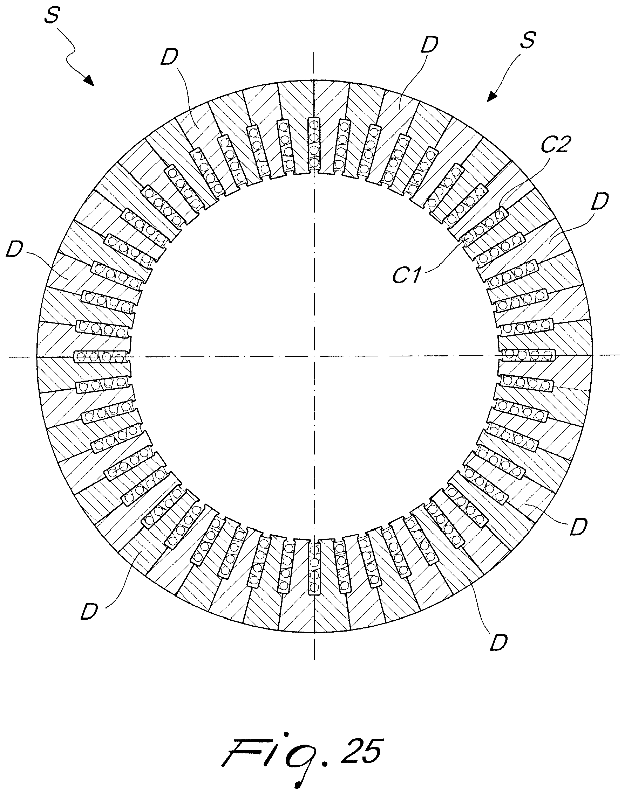

It should be noted that preferably the first winding pitch P1 and the second winding pitch P2 are differentiated so as to compensate the radial distance from the central axis around which the two cylindrical windings of woven wires C1 and C2 are arranged, i.e., so that when the process is finished the ends of the wires A1-A12, B1-B12, which protrude longitudinally and parallel to each other, are aligned along the same radii, as is evident for example from Figures 25, 28 and 32.

In the preferred embodiment of the method, during the rolling step, the winding pitch P1 of the linear windings of woven wires V1, V2 is kept constant, during rolling, by means of a series of engagement teeth 37 which are fixed along the cylindrical surface 31 and are inserted between the wires of the linear windings of woven wires V1, V2 while these are rolled.

At the end of the rolling step, the internal cylindrical winding of woven wires C1 and the external cylindrical winding of woven wires C2 are arranged around the roller 33.

Preferably, the first linear winding of woven wires V1 and the second linear winding of woven wires V2 are pressed and rolled in sequence, first one then the other.

The pressing step and the rolling step are preferably provided by means of a machine 2 which comprises a preferably horizontal supporting surface 32, along which a compression device 20, configured to press transversely at least one linear winding of woven wires V1, V2 (and preferably the first linear winding of woven wires V1 and the second linear winding of woven wires V2), and a rolling device 30, configured to roll said first linear winding of woven wires V1 and said second linear winding of woven wires V2 after they have been pressed, are arranged in series (i.e., in line).

A possible embodiment of the machine 2 is shown in Figures 12-14.

In the illustrated example, the supporting surface 32, the compression device 20 and the rolling device 30 are supported by a supporting structure 38.

Preferably, the compression device 20 comprises a vise, which comprises one or more plates 21 which are arranged parallel to the supporting surface 32 and are moved toward it, in a known manner, by means of a movement device 21, so as to compress a linear winding of woven wires V1, V2 arranged between the plates 21 and the supporting surface 32.

In greater detail, the rolling device 30 comprises a roller 33 which can rotate about its own longitudinal axis. The roller 33 in turn comprises an external cylindrical surface 31 (around which the linear windings of woven wires V1, V2 are rolled) and is arranged above the supporting surface 32 so that said cylindrical surface 31 is arranged substantially tangent to said supporting surface 32, in contact with at least one of the linear windings of woven wires V1, V2 when the latter is exiting from the compression device 20.

In even greater detail, the external cylindrical surface 31 comprises a series of seats (for example longitudinal slots or holes) adapted to be engaged by respective engagement teeth 37 which are configured to be inserted between the wires of the linear windings of woven wires V1, V2 so as to entrain them along said cylindrical surface 31, curving the linear windings of woven wires V1, V2 along said cylindrical surface 31, and so as to keep the winding pitch P1, P2 of the windings V1, V2 constant while they are being curved.

In practice, as shown in Figure 13, the engagement teeth 37 are coupled to the roller 33 during the rolling phase to be then removed when rolling has ended.

The rolling device 30 further comprises a kinematic actuation system 35 in order to rotationally actuate the roller 33, such as for example a kinematic system which comprises a crank adapted to be functionally connected to a motor.

Conveniently, the supporting surface 32 comprises a soft (i.e., flexible) planar surface so as to adapt to the circumference of the roller 33 when it entrains in rolling (i.e., winds) the first linear winding of woven wires V1 and/or the second linear winding of woven wires V2, thus avoiding a transverse compression thereof.

Subsequently, in the winding repositioning step, the internal cylindrical winding of woven wires C1 and the external cylindrical winding of woven wires C2 are extracted integrally (i.e., simultaneously, preferably substantially without mutual movements) from the roller 33 and are coupled to a cylindrical separation element 39, such as for example a hollow tubular element having a circular cross-section.

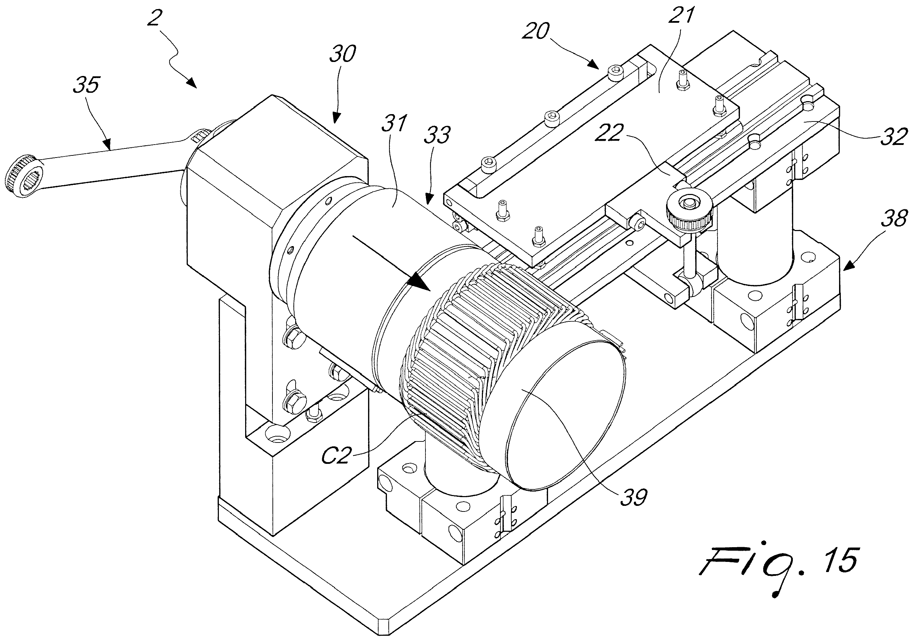

In greater detail, as shown in Figures 15-18, the cylindrical windings of woven wires C1, C2 are coupled to the cylindrical separation element 39 so that the cylindrical separation element 39 is interposed between the internal cylindrical winding of woven wires C1 and the external cylindrical winding of woven wires C2.

In order to facilitate this operation, the cylindrical separation element 39 is provided with a coupling end 391, which has a smaller diameter than the rest of the cylindrical separation element 39 and is adapted to engage the roller 33. Conveniently, the cylindrical separation element 39, at least in the portion adapted to accommodate the cylindrical windings C1, C2, has an outside diameter that is substantially equal to that of the external cylindrical surface 31 of the roller 33.

Subsequently, the internal cylindrical winding of woven wires C1, the external cylindrical winding of woven wires C2 and the cylindrical separation element 39, while remaining mutually coupled, are arranged on a supporting device 40. In the preferred embodiment, the supporting device 40 is provided with an external cylindrical supporting surface 41 the outside diameter of which substantially coincides with the inside diameter of the internal cylindrical winding of woven wires C1.

The internal cylindrical winding of woven wires C1 and the external cylindrical winding of woven wires C2 are therefore positioned and kept in position around said cylindrical supporting surface 41.

Once the positioning on the supporting device 40 has been provided, there is a step for freeing space between the windings in order to allow the passage of the stator teeth D, in which the cylindrical separation element 39 is made to slide with respect to the cylindrical windings of woven wires C1, C2 (coaxially with respect to the cylindrical supporting surface 41) so as to free at least partially the space interposed between the internal cylindrical winding of woven wires C1 and the external cylindrical winding of woven wires C2 so as to allow the insertion of a plurality of stator teeth D through said cylindrical windings of woven wires C1, C2.

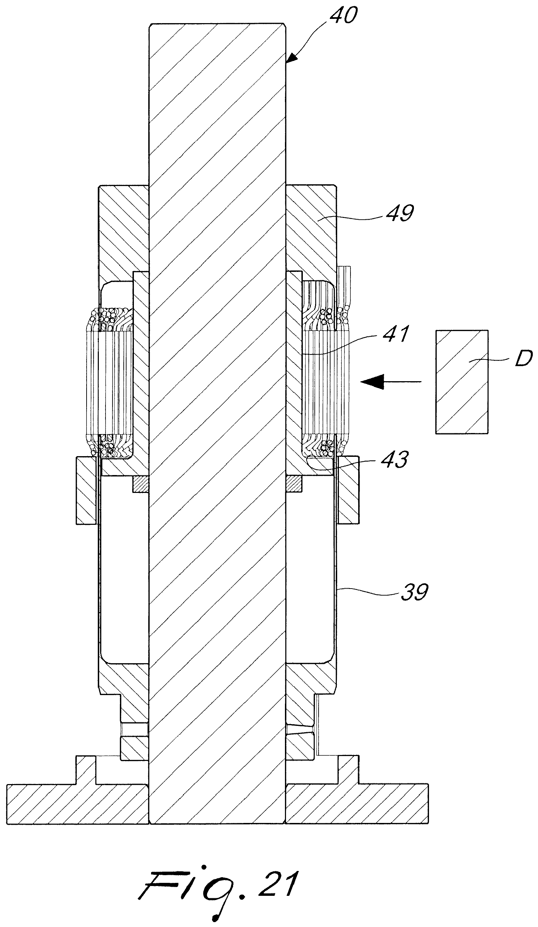

As shown in particular in Figure 21, during the step for freeing space between the windings in order to allow the passage of the stator teeth D (in particular when the cylindrical separation element 39 is moved), an additional cylindrical separation element 49 is partially inserted between the internal cylindrical winding of woven wires C1 and the external cylindrical winding of woven wires C2. In greater detail, the additional cylindrical separation element 49 is inserted longitudinally through a longitudinal end of the space between the cylindrical windings (C1, C2) that is opposite with respect to the longitudinal end from which the cylindrical separation element 39 is made to protrude at least partially, in order to keep constant the mutual arrangement of the cylindrical windings C1, C2.

Finally, as already mentioned, the method provides for the step of inserting and fixing the stator teeth D, in which multiple stator teeth D are inserted radially within the cylindrical windings of woven wires C1, C2, with the known radial arrangement, and are fixed to each other so as to form substantially a ring and provide a stator pack S.

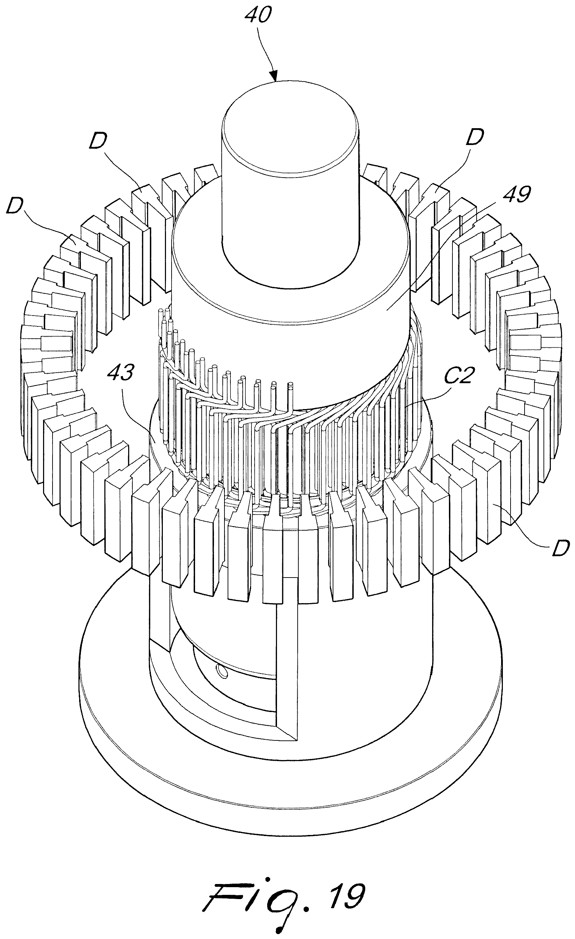

Advantageously, the insertion and fixing of the stator teeth D occurs with the cylindrical windings of woven wires C1, C2 arranged on the supporting device 40, as shown in Figure 19.

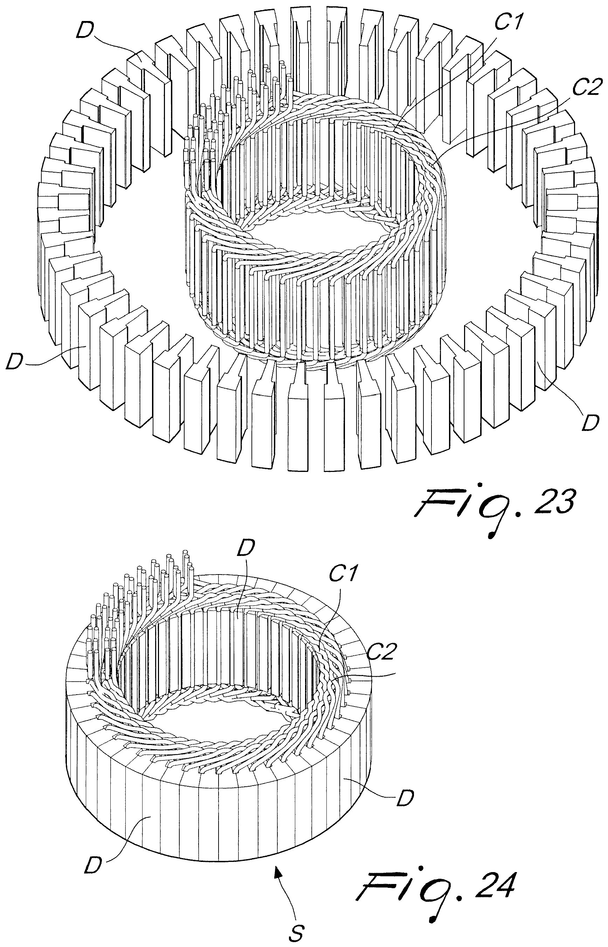

In a first possible embodiment, shown in Figures 23 and 24, in the step for insertion and fixing of the stator teeth D, the stator teeth D are inserted from the outside inward and are then mutually welded externally, so as to obtain a stator pack S such as the one shown in Figure 25.

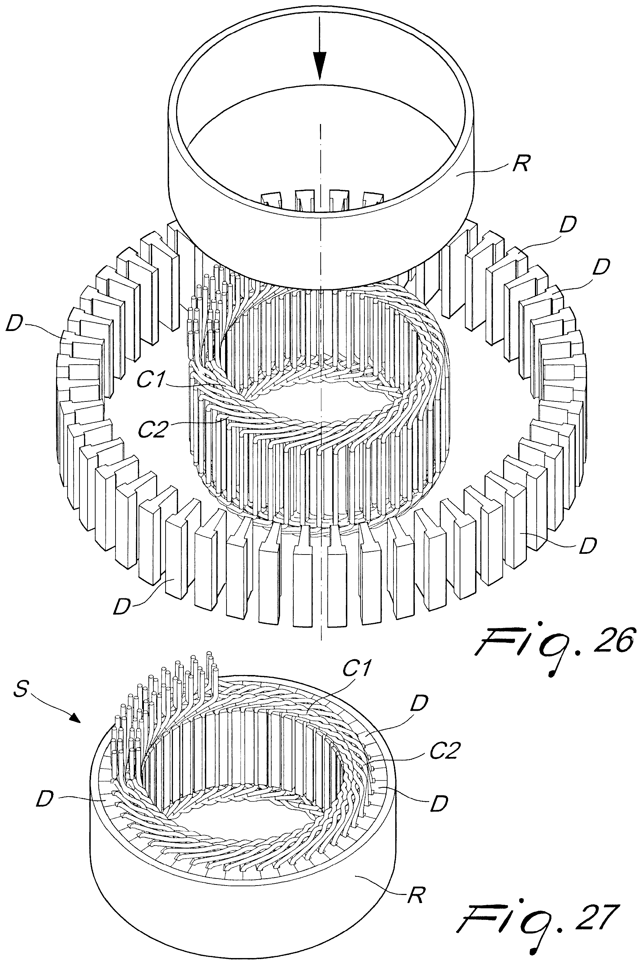

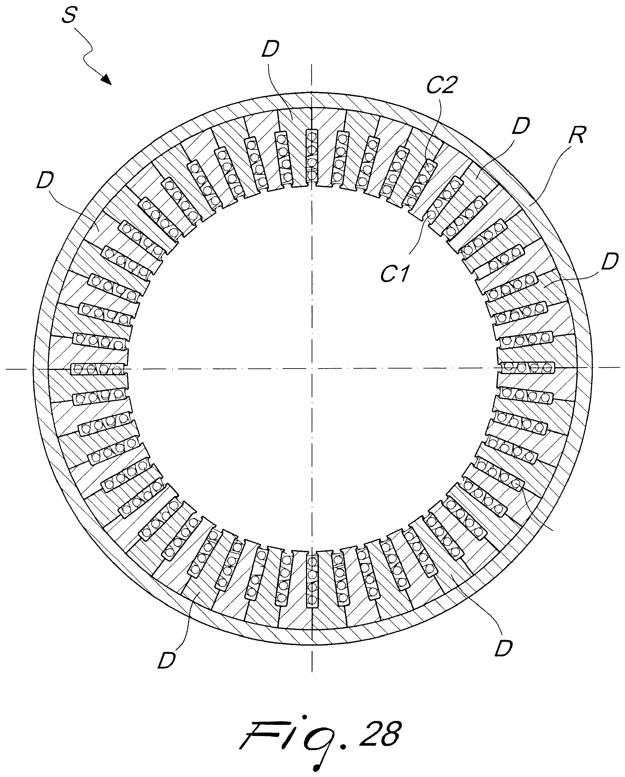

In a second possible embodiment, shown in Figures 26 and 27, in the step for insertion and fixing of the stator teeth D, the stator teeth D are inserted from the outside inward and are then fixed by keying externally an external stator ring R so as to obtain a stator pack S such as the one shown in Figure 28.

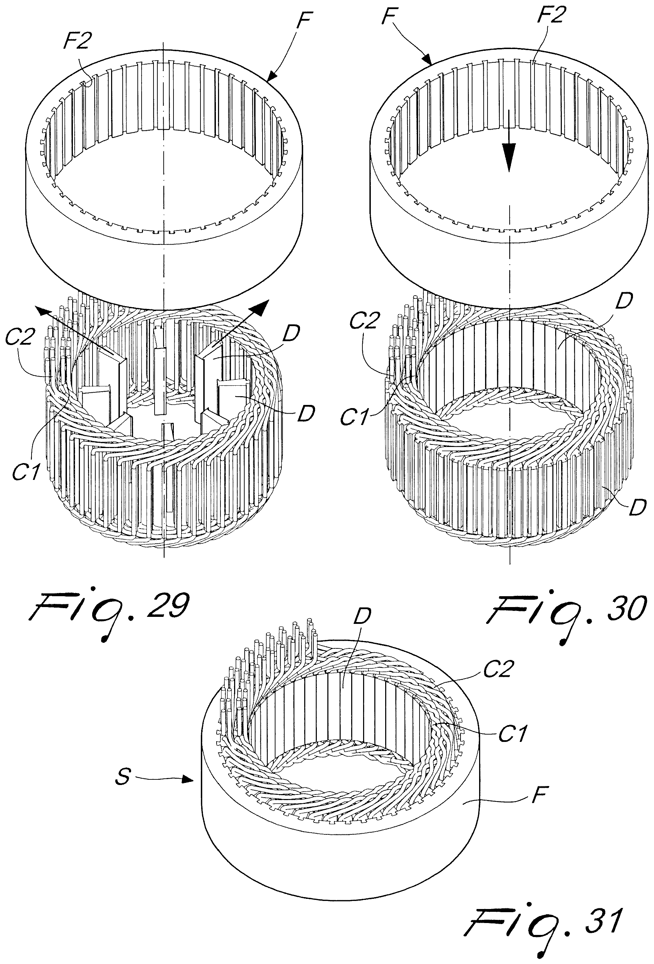

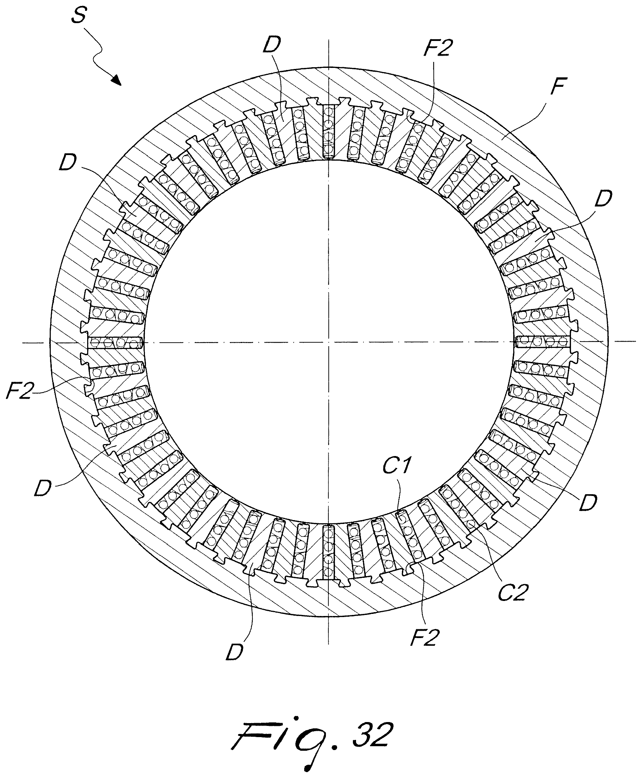

In a third possible embodiment, shown in Figures 29-31, in the step for insertion and fixing of the stator teeth D, the stator teeth D are inserted from the inside outward and are then fixed by interlocking externally an external fixing stator ring F provided with internal longitudinal slots F2 with an undercut (for example dovetail shaped) which are engaged by complementary external ends of the stator teeth D so that the teeth are mechanically fixed in position; a stator pack S obtained by means of this third embodiment is shown in Figure 32.

Subsequently, the provision of the stator can optionally continue according to known methods.

The embodiments in which a single plurality of wires Z1-Z12 is wound so as to obtain a single linear winding of woven wires V3 are now described in greater detail hereinafter with reference to Figures 35 to 44 . For the sake of brevity, only the characteristics that differentiate these embodiments from the ones that have already been described will be described hereinafter and therefore, except for the differences explicitly indicated as such, everything that has been described and specified so far is to be considered as referring also to the embodiments described hereinafter. For example, in this illustrated example also, the wires Z1-Z12 are twelve and the characteristics of the wires Z1-Z12 are the same as the wires A1-A12, B1-B12 described previously.

As already mentioned, these embodiments differ from the ones described previously in that during the winding phase a single plurality of wires Z1-Z12 is wound so as to provide a single linear winding of woven wires V3.

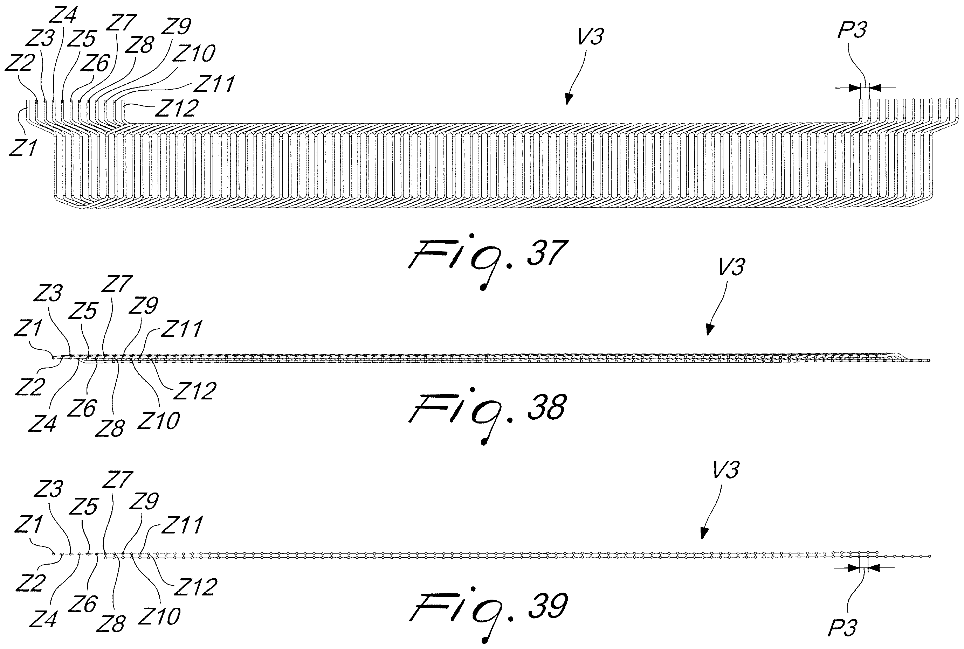

Once the pressing step has been performed, a linear winding of woven wires V3 with a winding pattern such as the one shown in Figures 37-39 is obtained; it should be noted that the wires Z1-Z12 are woven, comprise a series of bends and have the ends of the wires that protrude in a linear and mutually parallel manner.

Preferably, the winding is provided by means of a winding device 10, 10' such as one of the ones described previously, in the same manner.

Conveniently, the wires Z1-Z12 are wound with a winding pitch P3 which, for an equal radius of the stator S, S' to be provided, has a value that is intermediate between the values of the first winding pitch P1 and the second winding pitch P2 of the two windings V1, V2 provided in the previously described embodiments.

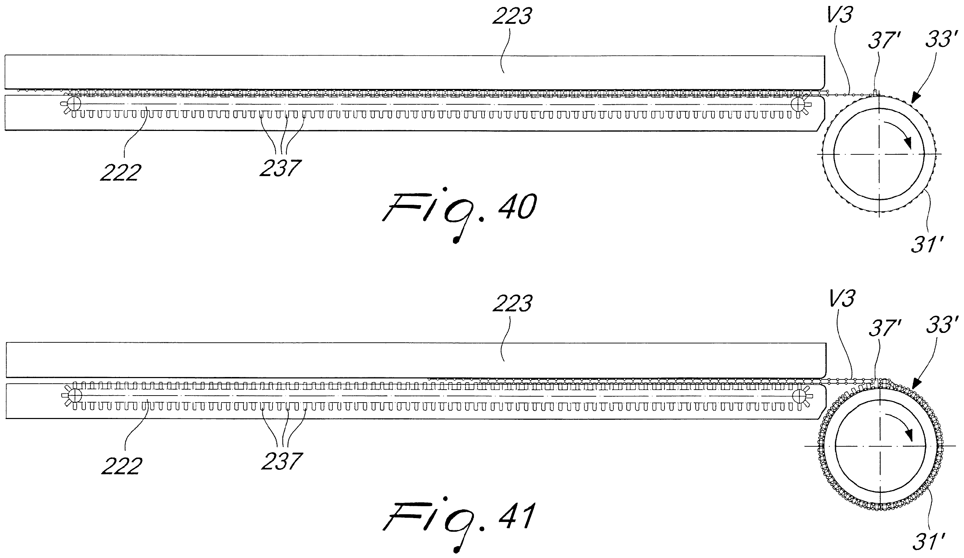

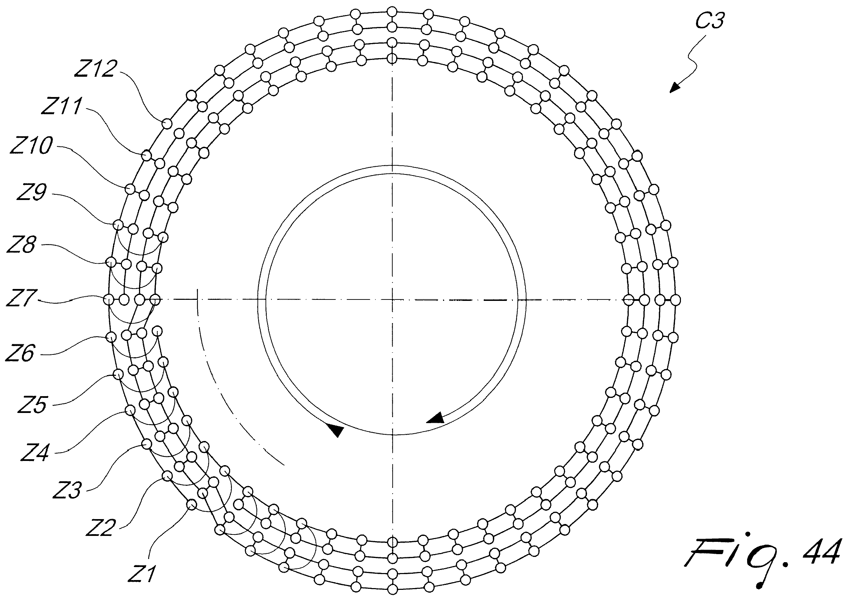

Furthermore, in these embodiments, in the rolling step (shown by Figures 40 to 43), the single linear winding of woven wires V3 is wound twice around the roller 33' so as to form, around said roller 33', a single and continuous cylindrical winding of woven wires C3 which comprises an internal layer and an external layer which are mutually adjacent and coaxial, as shown in Figure 44.

In practice, two complete windings around the roller 33' are performed so that the rectilinear portions of the wires Z1-Z12 are all aligned along four coaxial cylindrical surfaces having increasing diameters, as is evident again from Figure 44.

The pressing and winding steps also can be performed by means of a machine 2 such as the one already described.

Preferably, in the rolling step, the winding pitch P3 of the linear winding of woven wires V3 is kept constant, during rolling, by means of a series of retractable engagement teeth 37', which are arranged along the cylindrical surface 31' and are moved radially with respect to the cylindrical surface 31' (i.e., moved from a retracted position in which they are contained inside the roller 33' - below the cylindrical surface 31' - toward an expanded position, in which they protrude radially from the cylindrical surface 31' of the roller 33'), so as to be inserted between the wires of the linear winding of woven wires V3 while it is rolled.

In this case, the roller 33', comprised in the machine 2 used to provide the winding step, therefore comprises a series of retractable engagement teeth 37', which are arranged along the cylindrical surface 31' so that they can be moved radially with respect to the cylindrical surface 31' and are configured in order to be inserted between the wires of the linear winding of woven wires V3 so as to entrain it along said cylindrical surface 31', curving it along the cylindrical surface 31', and so as to keep constant the winding pitch P3 of the linear winding of woven wires V3 while it is being curved.

Advantageously, in these embodiments of the method the cylindrical separation element 39 is not used, since there is a single cylindrical winding of woven wires C3 and therefore the step of freeing space between the windings to allow the passage of the stator teeth D is not necessary.

According to an optional and advantageous characteristic, shown in Figures 40-43, in the rolling step the roller 33' is fed by means of a conveyor belt 222 (arranged for example on the supporting surface 32 of a machine 2 similar to the one already described), which conveys the linear winding of woven wires V3 toward the roller 33' along a direction that is substantially tangent to the cylindrical surface 31'. Advantageously, the linear winding of woven wires V3 is constrained along such direction that is substantially tangent to the cylindrical surface 31' by means of positioning teeth 237 which are inserted between the wires Z1-Z12 of the linear winding of woven wires V3 while it is being conveyed.

In general, without limitation to the embodiments in which a single linear winding of woven wires V3 is provided, the machine 2 for providing the rolling step comprises optionally (see Figures 40-43):
- a conveyor belt 222, which is configured to convey a linear winding of woven wires V3 toward the roller 33' along a direction that is substantially tangent to the cylindrical surface 31'; said conveyor belt 222 being provided with positioning teeth 237 which are adapted to be inserted between the wires of a linear winding of woven wires V3 so as to at least contribute to constrain the linear winding of woven wires V3 along the direction that is substantially tangent to the cylindrical surface 31' and
- a guiding element 223 (such as for example a plate or a rectilinear guide), which is arranged substantially parallel to the conveyor belt 222, above it, so as to at least contribute to constrain the linear winding of woven wires V3 along the direction that is substantially tangent to the cylindrical surface 31, toward the cylinder 33'.

In these embodiments also, the step for the insertion and fixing of the stator teeth D is preferably performed according to one of the methods already described and illustrated in Figures 23 to 31.

The present invention also relates to a processing line (i.e., a set of devices and apparatuses which are not necessarily physically connected to each other, suitable to perform successive processes) for the provision of the method according to the invention, which generally comprises:
- at least one winding device 10, 10', such as for example one of those already described, configured to provide the winding phase,
- one or more machines 2, such as for example one of those already described or two separate machines (one for pressing and one for rolling), configured to provide the pressing step and the rolling step,
- an apparatus which is configured to provide at least the winding repositioning step and comprises at least one support adapted to support the at least one cylindrical winding of woven wires C1, C2, C3, such for example a supporting device 40 provided with a cylindrical supporting surface 41 such as the one already described or other support of a known type, and optionally but not necessarily instruments for the movement of the at least one cylindrical winding of woven wires C1, C2, C3.

In a possible embodiment useful to perform the embodiments of the method in which two different pluralities of wires A1-A12, B1-B12 are wound, the processing line comprises:
- a first winding device 10, such as the one already described, configured to provide a first linear winding of woven wires V1 which has a first winding pitch P1,
- a second winding device 10', such as the one already described, configured to provide a second linear winding of woven wires V2 which has a second winding pitch P2 which is greater than said first winding pitch,
- a machine 2, such as the one already described, configured to press and curve said first linear winding of woven wires V1 and said second linear winding of woven wires V2 so as to obtain an internal cylindrical winding of woven wires C1 and an external cylindrical winding of woven wires C2 which is arranged coaxially and externally to the internal cylindrical winding of woven wires C1 and
- an apparatus, such as the one already described and comprising a cylindrical separation element 39 and a supporting device 40, configured to allow the insertion of a plurality of stator teeth D within the internal cylindrical winding of woven wires C1 and the external cylindrical winding of woven wires C2 in order to provide a stator pack S such as the one shown for example in Figures 33 and 34.

Operation of the processing line is clear and evident from what has been described.

In practice it has been found that the method and the processing line for providing the method according to the present invention achieve the intended aim and objects, since they allow to provide windings of the continuous hairpin type in a manner that is simple, reliable and economically competitive.

Another advantage of the method and the processing line according to the invention resides in that they allow optimum management of the pitch of the wires during the entire cycle for the production of the stator pack.

A further advantage of the method and the processing line according to the invention resides in that they provide an alternative with respect to the prior art.

Another advantage of the method and the processing line according to the invention resides in that they ensure high precision in the execution of the windings.

The method for providing the winding of a plurality of wires within a stator pack of a stator for electric motors and the processing line for providing the method thus conceived are susceptible of numerous modifications and variations, all of which are within the scope of the appended claims.

All the details may furthermore be replaced with other technically equivalent elements.

In practice, the materials used, as well as the contingent shapes and dimensions, may be any according to the requirements and the state of the art.

## Claims

1. A method for providing the winding of a plurality of wires within a stator pack (S) of a stator for electric motors, **characterized in that** it comprises:
- a winding phase, in which at least one plurality of wires (A1-A12, B1-B12, Z1-Z12) arranged with their ends aligned is wound around a respective linear support (11, 11') so that all the wires (A1-A12, B1-B12, Z1-Z12) of said at least one plurality of wires (A1-A12, B1-B12, Z1-Z12) are wound with a same winding pitch (PI, P2, P3) and each wire (A1-A12, B1-B12, Z1-Z12) of said at least one plurality of wires (A1-A12, B1-B12, Z1-Z12) is offset with respect to the adjacent wire by a said winding pitch (PI, P2, P3) so as to provide at least one linear winding of woven wires (VI, V2, V3) around said linear support (11, 11');
- a winding release step, in which said linear support (11, 11') is extracted from the inside of said at least one linear winding of woven wires (VI, V2, V3);
- a pressing step, in which said at least one linear winding of woven wires (VI, V2, V3) is pressed transversely by means of a compression device (20);
- a rolling step, in which said at least one linear winding of woven wires (VI, V2, V3) is curved along a cylindrical surface (31) by rolling it around a roller (33, 33') so as to convert said at least one linear winding of woven wires (VI, V2, V3) into at least one cylindrical winding of woven wires (CI, C2, C3); said at least one cylindrical winding of woven wires (CI, C2, C3) being arranged around said roller (33, 33');
- a winding repositioning step, in which said at least one cylindrical winding of woven wires (CI, C2, C3) is extracted from said roller (33, 33') and is arranged on a supporting device (40);
- a step for the insertion and fixing of the stator teeth (D), in which multiple stator teeth (D) are inserted radially within said at least one cylindrical winding of woven wires (CI, C2, C3) and are mutually fixed so as to form substantially a ring and provide a stator pack (S).

2. The method according to claim 1, **characterized in that** in said winding step, the winding pitch (P3) of said at least one linear winding of woven wires (V3) is kept constant, during rolling, by means of a series of retractable engagement teeth (37') which are arranged along said cylindrical surface (31') and are moved radially with respect to said cylindrical surface (31'), so to be inserted between the wires of said linear winding of woven wires (V3) while it is being rolled.

3. The method according to one or more of the preceding claims, **characterized in that** in said rolling step said roller (33') is fed by means of a conveyor belt (222) which conveys said at least one linear winding of woven wires (V3) toward said roller (33') along a direction that is substantially tangent to said cylindrical surface (31); said linear winding of woven wires (V3) being constrained along said direction that is substantially tangent to said cylindrical surface (31) by means of positioning teeth (237) which are inserted between the wires (Z1-Z12) of said linear winding of woven wires (V3) while it is being conveyed.

4. The method according to one or more of the preceding claims, **characterized in that**
in said winding phase, a single plurality of wires (Z1-Z12) is wound so as to provide a single linear winding of woven wires (V3) and
in said rolling step, said single linear winding of woven wires (V3) is wound twice around said roller (33') so as to form, around said roller (33'), a single and continuous cylindrical winding of woven wires (C3) which comprises an internal layer and an external layer which are mutually adjacent and coaxial.

5. The processing line according to claim 4, **characterized in that** said roller (33') comprises a series of engagement teeth (37') which are arranged along said cylindrical surface (31') so that they can be moved radially with respect to said cylindrical surface (31'), and configured to be inserted between the wires of said linear winding of woven wires (V3) so as to entrain it along said cylindrical surface (31'), curving said linear winding of woven wires (V3) along said cylindrical surface (31') and so as to keep constant the winding pitch (P3) of said linear winding of woven wires (V3) while it is being curved.

6. The processing line according to one or more of the preceding claims, **characterized in that** said machine (2) comprises
- a conveyor belt (222) configured to convey a linear winding of woven wires (V3) toward said roller (33') along a direction that is substantially tangent to said cylindrical surface (31'); said conveyor belt (222) being provided with positioning teeth (237) which are adapted to be inserted between the wires of said linear winding of woven wires (V3) so as to at least contribute to constrain said linear winding of woven wires (V3) along said direction that is substantially tangent to said cylindrical surface (31') and
- a guiding element (223) arranged substantially parallel to said conveyor belt (222), above it, so as to at least contribute to constraining said linear winding of woven wires (V3) along said direction that is substantially tangent to said cylindrical surface (31').
